# EUROPÄISCHE PATENTSCHRIFT

(11) **EP 0 635 213 B1**
(45) Veröffentlichungstag und Bekanntmachung des Hinweises auf die Patenterteilung: **03.03.1999**
(21) Anmeldenummer: 94110359.0
(22) Anmeldetag: 04.07.1994
(51) Int. Cl.: A22C 13/00

(54) **Schlauchförmige Nahrungsmittelhülle mit verbesserter Abschälbarkeit**
Tubular food casing having improved peeling properties
Enveloppes tubulaires pour aliments ayant des propriétés de décollage améliorées

(30) Priorität: 19.07.1993 DE 4324168
(43) Veröffentlichungstag der Anmeldung: 25.01.1995
(73) Patentinhaber: HOECHST AKTIENGESELLSCHAFT, 65926 Frankfurt am Main (DE)
(72) Erfinder: Hammer, Klaus-Dieter, Dr., D-55120 Mainz (DE); Mans, Leo, Dr., D-55120 Mainz (DE); Siebrecht, Manfred, Dr., D-65207 Wiesbaden-Naurod (DE)
(74) Vertreter: Zounek, Nikolai, Dipl.-Ing.

(56) Entgegenhaltungen:
- EP-A- 0 028 858
- EP-A- 0 502 431
- EP-A- 0 502 432
- DE-A- 2 546 278

## Beschreibung

Die Erfindung betrifft eine schlauchförmige Nahrungsmittelhülle, insbesondere eine Wursthülle, auf Cellulosebasis, die eine beschichtete Innenseite zur verbesserten Abschälbarkeit aufweist. Sie betrifft ferner die dazu verwendete Beschichtungslösung.

Unbehandelte Wursthüllen auf Cellulosebasis haften gewöhnlich so stark am Füllgut, insbesondere an ungeräuchertem oder geräuchertem Würstchen- oder Brühwurstbrät, daß sie nicht ohne Aufreißen der Füllgutoberfläche abgezogen werden können.

Die in der EP-A 0 028 858 beschriebenen wiederverwendbaren Wursthüllen, die aus einer porösen Polytetrafluorethylen(PTFE)-Membran bestehen, zeigen eine besonders geringe Bräthaftung.

Behandelte Wursthüllen, z. B. Cellulosehüllen, die sich relativ leicht abschälen lassen ("easy peel"), sind in der EP-A 0 502 432 beschrieben. Diese Hüllen tragen auf der Innenseite eine Schicht aus Alginat, Alginsäure und/oder Chitosan. Diese Trennmittel sind der Cellulose in ihrer chemischen Struktur ähnlich. Die Beschichtung wird üblicherweise durch Einfüllen oder Aufsprühen einer Beschichtungsflüssigkeit hergestellt. Aufgrund ihrer hohen Viskosität lassen sich Alginat, Alginsäure und Chitosan jedoch nicht in der Menge aufsprühen, die eine optimale Trennung vom Füllgut bewirkt.

In der ES-A 549 161 ist die Verwendung eines Gemisches aus Lecithin und Celluloseether zur Beschichtung von Cellulose-Wursthüllen beschrieben.

In der EP-A 0 502 431 ist eine besonders leicht abziehbare Cellulosehülle mit einer Beschichtung, die neben Alginat, Chitosan und/oder Casein noch Lecithin enthält, offenbart.

Eine leicht abziehbare Wursthülle auf Cellulosebasis ist auch in der DE-A 22 27 438 (= US-A 3 898 348) beschrieben. Sie ist innen mit einem Zweikomponenten-Gemisch beschichtet. Eine Komponente ist ein wasserlöslicher Celluloseether, die zweite ein tierisches oder pflanzliches Öl, Mineralöl, Siliconöl und/oder ein wasserlösliches Addukt eines Alkylenoxids mit einem Fettsäurepartialester.

Die Wursthülle auf Cellulosebasis gemäß der DE-A 25 46 681 (= GB-A 1 470 726) weist eine ähnliche Innenbeschichtung auf. Sie enthält als erste Komponente einen wasserlöslichen Celluloseether und als zweite ein Gemisch aus Mono- und Diglyceriden der Ölsäure sowie gegebenenfalls noch einen partiellen Fettsäureester des Sorbitans oder Mannitans.

Eine innenbeschichtete Wursthülle mit einem Gemisch aus Mineralöl, einem in Mineralöl wenig löslichen alkoxylierten Emulgator und einem acetylierten Fettsäuremonoglycerid ist in der DE-A 23 00 338 (= US-A 3 818 947) beschrieben.

Außer den genannten celluloseähnlichen, β-glucosidische Bindungen enthaltenden Verbindungen, wie Chitosan oder Alginat, sind bisher keine anderen Easy-Peel-Wirkkomponenten bekannt geworden.

Aufgabe der vorliegenden Erfindung war es daher, eine Beschichtungslösung zu schaffen, die sich einfach auf die Cellulosehülle auftragen läßt und auch bei geringer Auftragsmenge zu nahezu 100%iger Schälbarkeit der damit beschichteten Hüllen führt. Insbesondere sollte die Beschichtungslösung sprühbar sein.

Die Aufgabe wird gelöst durch eine wäßrige, Lecithin enthaltende Beschichtungslösung für Nahrungsmittelhüllen auf Cellulosebasis, die dadurch gekennzeichnet ist, daß sie zusätzlich Poly(tetrafluorethylen) = PTFE enthält.

Eine sprühfähige, homogene Lösung gemäß der vorliegenden Erfindung enthält neben Wasser 2 bis 15 Gew.-%, bevorzugt 5 bis 12 Gew.-%, an Lecithin und 0,5 bis 6 Gew.-%, bevorzugt 1 bis 3 Gew.-%, an PTFE, jeweils bezogen auf das Gesamtgewicht der Beschichtungslösung. Daneben kann die Lösung zur Erleichterung des nachfolgenden Raffprozesses und zur gleichmäßigen Verteilung der Beschichtung noch bis zu 8 Gew.-%, bevorzugt 0,5 bis 6 Gew.-%, besonders bevorzugt 2 bis 5 Gew.-%, an Ölen enthalten. Das Öl sollte nicht in das Füllgut übertreten und muß lebensmittelrechtlich unbedenklich sein, bevorzugt ist Siliconöl. Geeignet sind auch Paraffinöle und Wachse. Zur Stabilisierung der gerafften Hüllen kann die Lösung noch bis zu 3 Gew.-%, vorzugsweise 0,2 bis 3 Gew.-%, eines Weizenproteins (Weizengluten) enthalten. Bis zu 50 % des Wassers, bevorzugt 20 bis 50 %, können durch Propan-1,2-diol ersetzt sein. Dadurch kann der Feuchtigkeitsgehalt (= Wassergehalt) in den besprühten Wursthüllen gesteuert werden. Die Viskosität der Sprühlösung liegt im allgemeinen zwischen 20 bis 200 mPa·s (cP), vorzugsweise zwischen 140 und 180 mPa·s (cP).

Das Innenbeschichten der Wursthülle erfolgt vorzugsweise gleichzeitig mit dem Raffvorgang, z. B. durch eine sogenannte Innendornbesprühung. Hierzu wird ein hohler Raffdorn verwendet. Es wird soviel von der wäßrigen bzw. wäßrigalkoholischen Lösung aufgesprüht, daß sich der Gehalt an Feuchtigkeit in der Wursthülle von etwa 8 bis 10 Gew.-% auf 14 bis 18 Gew.-% erhöht.

Gegenstand der vorliegenden Erfindung ist schließlich auch eine schlauchförmige Nahrungsmittelhülle auf Cellulosebasis mit einer beschichteten Innenseite zur verbesserten Abschälbarkeit vom Füllgut, dadurch gekennzeichnet, daß die Innenbeschichtung 450 bis 800 mg/m² Lecithin, 30 bis 300 mg/m² Poly(tetrafluorethylen) und gegebenenfalls bis zu 500 mg/m² eines Öls enthält. Vorzugsweise enthält die Beschichtung 100 bis 500 mg/m² des Öls.

Mit den bisher gebräuchlichen Innenbeschichtungen ließen sich die Würste maximal zu 95 bis 98 % schälen, was bedeutet, daß beim automatischen Schälen von 100 Würsten 2 bis 5 Stück noch Hüllenreste aufwiesen. Die folgenden Beispiele zeigen, daß mit den erfindungsgemäß ausgestatten Hüllen fast 100 % erreicht werden. Wenn nicht anders angegeben, steht in "%" für " Gew.-%".

### Beispiel:

Eine Cellulosehydrat-Wursthülle vom Kaliber 23 mm mit einer Feuchte von 8 bis 10 % wird durch den Innendorn während des Raffens mit einer Lösung der Zusammensetzung
- 10,0 %: Lecithin,
- 33,0 %: Propan-1,2-diol,
- 0,4 %: Polyoxyethylen-sorbitan-monooleat (^{(R)}Tween 80),
- 0,2 %: Polyethylenglykol-monoalkylether (HO-[CH₂-CH₂-O]ₙ-[CH₂]ₘ-CH₃, wobei im Durchschnitt n = 8 und m = 12 ist) (^{(R})Genapol X 080),
- 12,5 %: Silikonöl-Dispersion,
- 3,0 %: Weizenprotein (^{(R)}Amypro SWP),
- 2,5 %: Poly(tetrafluorethylen)-Dispersion und
- 38,4 %: Wasser
besprüht, und zwar in der Menge, daß die füllfertigen gerafften Wursthüllen ("Raupen") einen Feuchtigkeitsgehalt von 14 bis 18 % besaßen. Die Raupen wurden mit Würstchenbrät gefüllt, etwa 20 min bei 60 °C umgerötet, anschließend 15 bis 20 min getrocknet, dann etwa 30 min geräuchert, 30 min gebrüht und schließlich abgekühlt. Beim automatischen Schälen lag die Schälbarkeit der Würste zwischen 99 und 100%.

### Vergleichsbeispiel

Es wurde gemäß vorherigem Beispiel verfahren, wobei jedoch eine Beschichtungslösung mit der Zusammensetzung
- 10,0 %: Lecithin,
- 35,0 %: Propan-1,2-diol,
- 0,4 %: Polyoxyethylen-sorbitan-monooleat (^{(R)}Tween 80),
- 0,2 %: Polyethylenglykol-monoalkylether (HO-[CH₂-CH₂-O]ₙ-[CH₂]ₘ-CH₃, wobei im Durchschnitt n = 8 und m = 12 ist) (^{(R)}Genapol X 080),
- 12,5 %: Silikonöl-Dispersion,
- 3,0 %: Weizenprotein (^{(R)}Amypro SWP) und
- 38,9 %: Wasser
verwendet wurde. Mit den so imprägnierten Hüllen wurden ebenfalls geräucherte Brühwürste hergestellt, die jedoch nur zu 95 bis 98 % schälbar waren.

## Patentansprüche

1. Schlauchförmige Nahrungsmittelhülle auf Cellulosebasis mit beschichteter Innenseite zur verbesserten Abschälbarkeit, dadurch gekennzeichnet, daß die Innenbeschichtung 450 bis 800 mg/m² Lecithin und 30 bis 300 mg/m² Poly(tetrafluorethylen) enthält.

2. Nahrungsmittelhülle gemäß Anspruch 1, dadurch gekennzeichnet, daß es sich um eine Wursthülle handelt.

3. Nahrungsmittelhülle gemäß Anspruch 1, dadurch gekennzeichnet, daß die Innenbeschichtung zusätzlich bis zu 500 mg/m², vorzugsweise 100 bis 500 mg/m², eines Öls, enthält.

4. Nahrungsmittelhülle gemäß Anspruch 1, dadurch gekennzeichnet, daß die Innenbeschichtung aufgesprüht ist.

5. Nahrungsmittelhülle gemäß Anspruch 3, dadurch gekennzeichnet, daß das Öl ein Siliconöl ist.

6. Wäßrige, lecithinhaltige Beschichtungslösung zum Imprägnieren einer Nahrungsmittelhülle auf Cellulosebasis, dadurch gekennzeichnet, daß die Lösung zusätzlich Poly(tetrafluorethylen) enthält.

7. Beschichtungslösung gemäß Anspruch 6, dadurch gekennzeichnet, daß sie sprühfähig ist und 2 bis 15 Gew.-%, bevorzugt 5 bis 12 Gew.-%, an Lecithin und 0,5 bis 6 Gew.-%, bevorzugt 1 bis 3 Gew.-%, jeweils bezogen auf das Gesamtgewicht der Lösung, an Poly(tetrafluorethylen) enthält.

8. Beschichtungslösung gemäß Anspruch 6, dadurch gekennzeichnet, daß sie bis zu 8 Gew.-%, bevorzugt 0,5 bis 6 Gew.-%, besonders bevorzugt 2 bis 5 Gew.-%, jeweils bezogen auf das Gesamtgewicht der Lösung, an Ölen enthält.

9. Beschichtungslösung gemäß Anspruch 8, dadurch gekennzeichnet, daß das Öl ein Siliconöl ist.

10. Beschichtungslösung gemäß Anspruch 6, dadurch gekennzeichnet, daß sie bis zu 3 Gew.-%, vorzugsweise 0,2 bis 3 Gew.-%, bezogen auf das Gesamtgewicht der Lösung, eines Weizenproteins enthält.

11. Beschichtungslösung gemäß Anspruch 6, dadurch gekennzeichnet, daß die Viskosität der Sprühlösung zwischen 20 bis 200 mPa·s (cP), vorzugsweise zwischen 140 und 180 mPa·s (cP), liegt.

12. Beschichtungslösung gemäß Anspruch 6, dadurch gekennzeichnet, daß bis zu 50 % des Wassers, bevorzugt 20 bis 50%, durch Propan-1,2-diol ersetzt sind.

## Claims

1. A tubular cellulose-based food casing having a coated inner side for improved peelability, which comprises the internal coating containing 450 to 800 mg/m² of lecithin, 30 to 300 mg/m² of poly(tetrafluoroethylene).

2. The food casing as claimed in claim 1, wherein the casing is a sausage casing.

3. The food casing as claimed in claim 1, wherein the internal coating additionally contains up to 500 mg/m², preferably 100 to 500 mg/m², of an oil.

4. The food casing as claimed in claim 1, wherein the internal coating is sprayed on.

5. The food casing as claimed in claim 3, wherein the oil is a silicone oil.

6. An aqueous, lecithin-containing coating solution for the impregnation of a cellulose-based food casing, which comprises the solution additionally containing poly(tetrafluoroethylene).

7. The coating solution as claimed in claim 6, wherein the coating solution is sprayable and contains 2 to 15 % by weight, preferably 5 to 12 % by weight of lecithin, and 0.5 to 6 % by weight, preferably 1 to 3 % by weight, each based on the total weight of the solution, of poly(tetrafluoroethylene).

8. The coating solution as claimed in claim 6, wherein the coating solution contains up to 8 % by weight, preferably 0.5 to 6 % by weight, particularly preferably 2 to 5 % by weight, each based on the total weight of the solution, of oils.

9. The coating solution as claimed in claim 8, wherein the oil is a silicone oil.

10. The coating solution as claimed in claim 6, wherein the coating solution contains up to 3 % by weight, preferably 0.2 to 3 % by weight, based on the total weight of the solution, of a wheat protein.

11. The coating solution as claimed in claim 6, wherein the viscosity of the spray solution is between 20 and 200 mPa·s (cP), preferably between 140 and 180 mPa·s (cP).

12. The coating solution as claimed in claim 6, wherein cup to 50 % of the water, preferably 20 to 50 %, is replaced by propane-1,2-diol.

## Revendications

1. Enveloppe en forme de boyau pour produits alimentaires, à base de cellulose, à face interne revêtue pour l'aptitude améliorée au pelage, caractérisée en ce que le revêtement interne contient de 450 à 800 mg/m² de lécithine et de 30 à 300 mg/m² de poly(tétrafluoroéthylène).

2. Enveloppe pour produits alimentaires selon la revendication 1, caractérisée en ce qu'il s'agit d'une enveloppe pour saucisses.

3. Enveloppe pour produits alimentaires selon la revendication 1, caractérisée en ce que le revêtement interne contient en outre jusqu'à 500 mg/m², de préférence de 100 à 500 mg/m², d'une huile.

4. Enveloppe pour produits alimentaires selon la revendication 1, caractérisée en ce que le revêtement interne est appliqué par pulvérisation.

5. Enveloppe pour produits alimentaires selon la revendication 3, caractérisée en ce que l'huile est une huile de silicone.

6. Solution aqueuse de revêtement contenant de la lécithine, pour l'imprégnation d'une enveloppe pour produits alimentaires à base de cellulose, caractérisée en ce que la solution contient en outre du poly(tétrafluoroéthylène).

7. Solution de revêtement selon la revendication 6, caractérisée en ce qu'elle est pulvérisable et contient de 2 à 15 % en poids, de préférence de 5 à 12 % en poids, de lécithine et de 0,5 à 6 % en poids, de préférence de 1 à 3 % en poids, dans chaque cas par rapport au poids total de la solution, de poly(tétrafluoroéthylène).

8. Solution de revêtement selon la revendication 6, caractérisée en ce qu'elle contient jusqu'à 8 % en poids, de préférence de 0,5 à 6 % en poids, de façon particulièrement préférée de 2 à 5 % en poids, dans chaque cas par rapport au poids total de la solution, d'huiles.

9. Solution de revêtement selon la revendication 8, caractérisée en ce que l'huile est une huile de silicone.

10. Solution de revêtement selon la revendication 6, caractérisée en ce qu'elle contient jusqu'à 3 % en poids, de préférence de 0,2 à 3 % en poids, par rapport au poids total de la solution, d'une protéine de blé.

11. Solution de revêtement selon la revendication 6, caractérisée en ce que la viscosité de la solution de revêtement est comprise entre 20 et 200 mPa.s (cP), de préférence entre 140 et 180 mPa.s (cP).

12. Solution de revêtement selon la revendication 6, caractérisée en ce que, jusqu'à 50 %, de préférence de 20 a 50 %, de l'eau, sont remplacés par du propane-1,2-diol.
